# EUROPEAN PATENT SPECIFICATION

(11) **EP 3 424 612 B1**
(45) Date of publication and mention of the grant of the patent: **20.01.2021**
(21) Application number: 17759678.0
(22) Date of filing: 17.02.2017
(51) Int. Cl.: B21K 1/06, B21J 5/12, B21K 1/30, B62M 17/00, B21J 5/08, B21K 1/12

(54) **METHOD FOR MANUFACTURING FORGED DRIVE SHAFT AND FORGED DRIVE SHAFT**
VERFAHREN ZUR HERSTELLUNG EINER GESCHMIEDETEN ANTRIEBSWELLE UND GESCHMIEDETE ANTRIEBSWELLE
PROCÉDÉ DE FABRICATION D'ARBRE D'ENTRAÎNEMENT FORGÉ, ET ARBRE D'ENTRAÎNEMENT FORGÉ

(30) Priority: 04.03.2016 JP 2016041947
(43) Date of publication of application: 09.01.2019
(73) Proprietor: Musashi Seimitsu Industry Co., Ltd., Aichi 441-8560 (JP)
(72) Inventor: WATANABE Ichiro, Toyohashi-shi Aichi 441-8560 (JP); SAWADA Masahito, Toyohashi-shi Aichi 441-8560 (JP); NUMAZAKI Yoshimi, Toyohashi-shi Aichi 441-8560 (JP); MAEDA Kazuhiro, Toyohashi-shi Aichi 441-8560 (JP)
(74) Representative: Tiburzi, Andrea
(86) International application number: PCT/JP2017/005828
(87) International publication number: WO 2017/150208

(56) References cited:
- WO-A1-2015/194309
- FR-A- 1 481 268
- JP-A- H0 671 378
- JP-A- H0 671 378
- JP-A- H1 147 867
- JP-A- 2003 062 636
- JP-A- 2006 159 211
- JP-A- 2015 006 847
- JP-U- 3 155 682
- KR-B1- 101 478 039
- US-A- 4 666 665

## Description

### TECHNICAL FIELD

The present invention relates to a method for manufacturing a forged drive shaft utilized in a power transmission device, and to a forged drive shaft.

### BACKGROUND ART

Patent Document 1 discloses a power unit for a small-sized vehicle. A continuously variable transmission is incorporated into the power unit. The continuously variable transmission includes a drive pulley fixed to a crankshaft and a driven pulley supported on a drive shaft. The driving force of the crankshaft is transmitted to the drive shaft by the action of a transmission belt wound around the drive pulley and the driven pulley. The rotation of the drive shaft is transmitted to an axle of a rear wheel via a gear mechanism. The gear mechanism includes a drive gear formed on the drive shaft.

Patent Document 2 discloses a technique for forging a spline shaft

Document JP H06 71378 A forms the basis for the preamble of claims 1 and 5 and discloses a method for manufacturing a forged drive shaft and the corresponding forged drive shaft.

### RELATED ART DOCUMENTS

### PATENT DOCUMENTS

Patent Document 1: Japanese Patent Application Laid-open No. 2015-6847
Patent Document 2: Japanese Patent No. 3407148

### SUMMARY OF THE INVENTION

### PROBLEMS TO BE SOLVED BY THE INVENTION

A drive shaft is formed by machining. For a drive gear a tooth groove is cut. The processing time for machining increases greatly according to the number of teeth of the drive gear.

The present invention has been accomplished in light of the above circumstances, and it is an object thereof to provide a method for manufacturing a forged drive shaft and a forged drive shaft that can contribute to a shortening of the processing time and an improvement in productivity by eliminating machining as much as possible while maintaining the function as a drive shaft.

### MEANS FOR SOLVING THE PROBLEMS

According to a first aspect of the present invention, there is provided a method for manufacturing a forged drive shaft according to claim 1.

According to a second aspect of the present invention, in addition to the first aspect, the step (C) of producing the forged drive shaft comprises a step of forging a cylindrical recess in a center of an end face of the gear shaft.

According to a third aspect of the present invention, in addition to the second aspect, the method comprises a step of leaving a deepest part of the cylindrical recess as a forged black surface when machining the end part of the gear shaft.

According to the invention, the method comprises a step of leaving a forged black surface on a tooth face in at least part of a region in an axial direction of the gear shaft of the gear molded product and machining the tooth face in another region in the axial direction.

According to a fifth aspect of the present invention, in addition to any one of the first to fourth aspects, the method comprises a step of machining a tooth tip large diameter portion while leaving a tooth groove as a forged black surface on the spline shaft of the gear molded product.

According to a sixth aspect of the present invention, there is provided a forged drive shaft according to claim 5.

### EFFECTS OF THE INVENTION

In accordance with the first aspect of the present invention, since there is provided a step of preparing a shaft material having a first preliminary cylindrical part that has a first diameter and extends in the axial direction, a second preliminary cylindrical part that has a second diameter that is larger than the first diameter, and a preliminary intermediate shaft part that connects to each other the first preliminary cylindrical part and the second preliminary cylindrical part and that has a diameter larger than the first diameter but smaller than the second diameter, the spline shaft can easily be forged on the first preliminary cylindrical part, and the gear shaft can easily be forged on the second preliminary cylindrical part. Since the step of forging a spline shaft molded product and the step of forging a gear molded product are separated, a spline shaft and a gear shaft having the desired precision can be formed. Moreover, since the spline shaft and the gear shaft are formed by forging, compared with a case in which all are formed by machining, the productivity is good and the total processing time can be shortened.

In accordance with the second aspect of the present invention, since the cylindrical recess is forged in the center of the end face of the gear shaft, the shaft material flows plastically around the outer periphery when forging the recess, thus giving a gear shaft without underfill.

In accordance with the third aspect of the present invention, the method has the step of leaving the deepest part of the cylindrical recess as a forged black surface when machining the end part of the gear shaft. Since the deepest part of the recess is thus left as a forged black surface, the number of processing steps can be reduced.

In accordance with the invention, the method has the step of leaving a forged black surface on a tooth face in at least part of the region in the axial direction and machining the tooth face in the other region in the axial direction. Part of the tooth face is thus left as a forged black surface, and the number of processing steps can be reduced.

In accordance with the fifth aspect of the present invention, since the method has the step of machining a tooth tip large diameter portion by leaving a tooth groove as a forged black surface on the spline shaft, the number of processing steps for the tooth groove can be reduced.

In accordance with the sixth aspect of the present invention, since the gear shaft includes a tooth face, the tooth face having a forged black surface on at least part of the region in the axial direction and having a machined face on the other range in the axial direction, the portion of the gear to be machined can be reduced, and it can have a structure that contributes to a shortening of the processing time and an improvement in the productivity when forging a gear shape.

### BRIEF DESCRIPTION OF DRAWINGS

[FIG. 1] FIG. 1 is a side view schematically showing the overall arrangement of a vehicle related to one embodiment of the present invention. (first embodiment)
[FIG. 2] FIG. 2 is a side view schematically showing the structure of a vehicle body frame of the vehicle. (first embodiment)
[FIG. 3] FIG. 3 is an enlarged sectional view along line 3-3 in FIG. 2. (first embodiment).
[FIG. 4] FIG. 4 is an enlarged sectional view of a drive shaft. (first embodiment)
[FIG. 5] FIG. 5 is a vertical sectional view schematically showing a method for manufacturing a drive shaft. (first embodiment)
[FIG. 6] FIG. 6 is an enlarged view, corresponding to part of FIG. 3, of a drive shaft related to another embodiment. (second embodiment)

### EXPLANATION OF REFERENCE NUMERALS AND SYMBOLS

- 11: Vehicle (two-wheeled motor vehicle)
- 91: Spline shaft
- 91a: Tooth groove
- 92: Gear shaft
- 92a: Forged black surface
- 93: Intermediate shaft part
- 99: Recess (indentation)
- 110: Shaft material
- 111: First preliminary cylindrical part
- 112: Second preliminary cylindrical part
- 113: Preliminary intermediate shaft part
- 114: First die
- 115: Spline molding part (first molding part)
- 128: Spline molded product
- 131: Second die
- 135: Gear molding part (seventh molding part)
- 138: Gear molded product
- A1: First diameter
- A2: Second diameter
- B2: First diameter
- D1: First diameter
- D2: Second diameter

### MODES FOR CARRYING OUT THE INVENTION

One embodiment of the present invention is explained below by reference to the attached drawings. In the explanation below, the front-and-rear, up-and-down, and left-and-right directions are on the basis of a rider on board a two-wheeled motor vehicle.

### FIRST EMBODIMENT

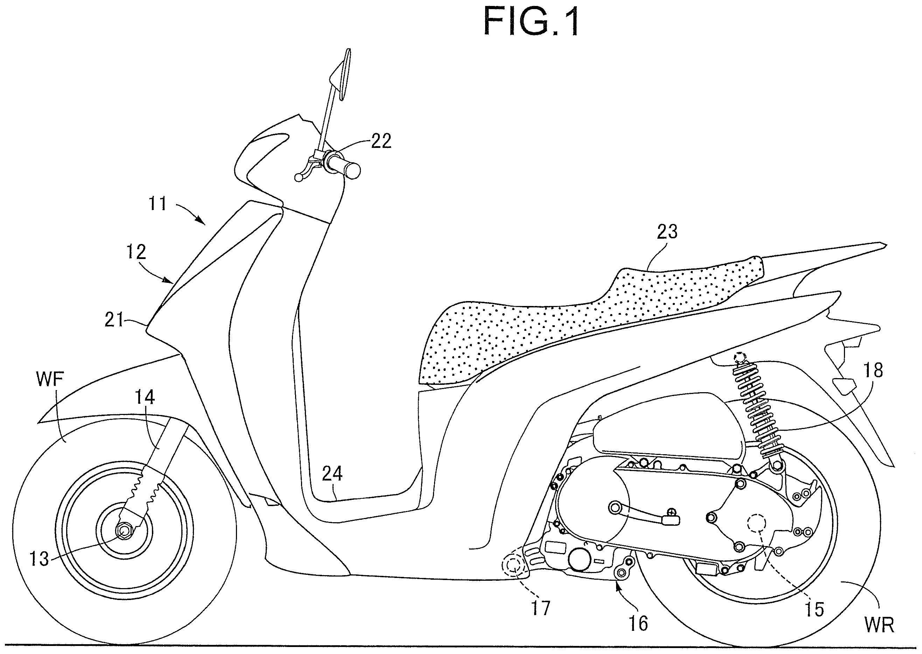

FIG. 1 schematically shows the overall arrangement of a vehicle 11 related to one embodiment of the present invention. The vehicle 11 is formed as a so-called scooter type two-wheeled motor vehicle. The vehicle 11 includes a vehicle body 12. Steerably supported on a front part of the vehicle body 12 is a front fork 14 supporting a front wheel WF so that it can freely rotate around an axle 13. Supported on a rear part of the vehicle body 12 is a power unit 16 supporting a rear wheel WR so that it can freely rotate around an axle 15, the power unit 16 being capable of swinging vertically around a support shaft 17. A rear cushion 18 is disposed between the vehicle body 12 and the power unit 16.

The vehicle body 12 includes an outer shell 21 made of a resin. An occupant seat 23 is mounted on the outer shell 21 to the rear of handlebars 22. A deck type floor 24 is formed on the outer shell 21 in front of the occupant seat 23.

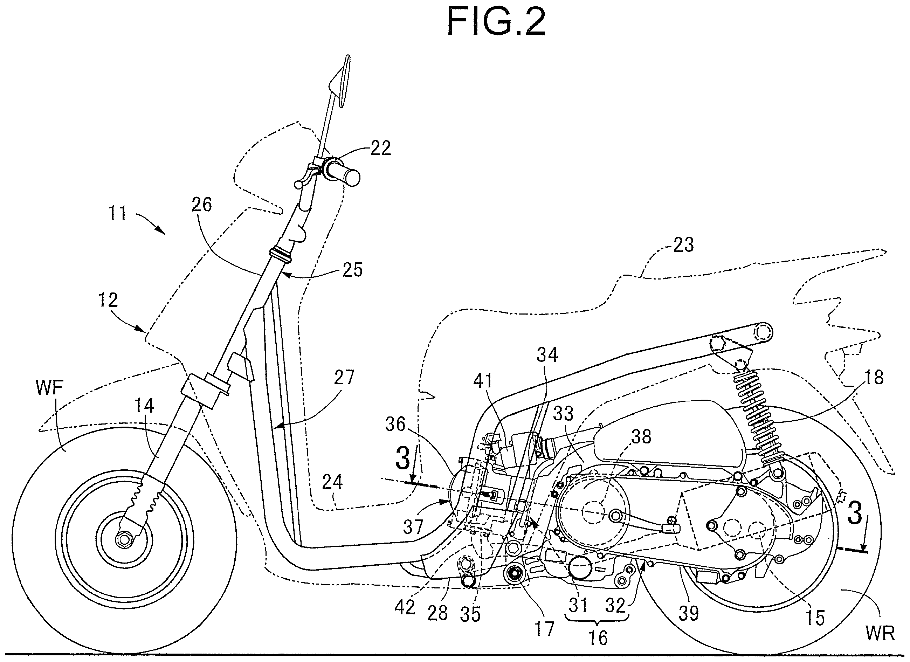

As shown in FIG. 2, the vehicle body 12 includes a vehicle body frame 25 that is covered by the outer shell 21. The vehicle body frame 25 is formed from a head pipe 26 and a pair of left and right side frames 27. The front end of the side frame 27 is joined to the head pipe 26. The front fork 14 is rotatably fitted into the head pipe 26. The side frame 27 extends downward from the head pipe 26, heads rearward beneath the floor 24, and extends upward to the rear between the power unit 16 and rear wheel WR and the occupant seat 23. A pivot plate 28 is fixed to the side frame 27. The power unit 16 is linked to the pivot plate 28 via the support shaft 17. The upper end of the rear cushion 18 is linked to the side frame 27. The lower end of the rear cushion 18 is linked to the power unit 16.

The power unit 16 includes an engine 31 and a transmission device 32 related to the first embodiment. The engine 31 includes an engine main body 37 that includes a crankcase 33, a cylinder block 34, a cylinder head 35 and a head cover 36. A crankshaft 38 is rotatably supported on the crankcase 33. The crankshaft 38 has a rotational axis that is parallel to the axle 15. A casing 39 of the transmission device 32 is joined to the crankcase 33. A cylinder axis C of the engine main body 37 is tilted forward around the rotational axis of the crankshaft 38. An air intake pipe 41 and an exhaust pipe 42 are connected to the cylinder head 35.

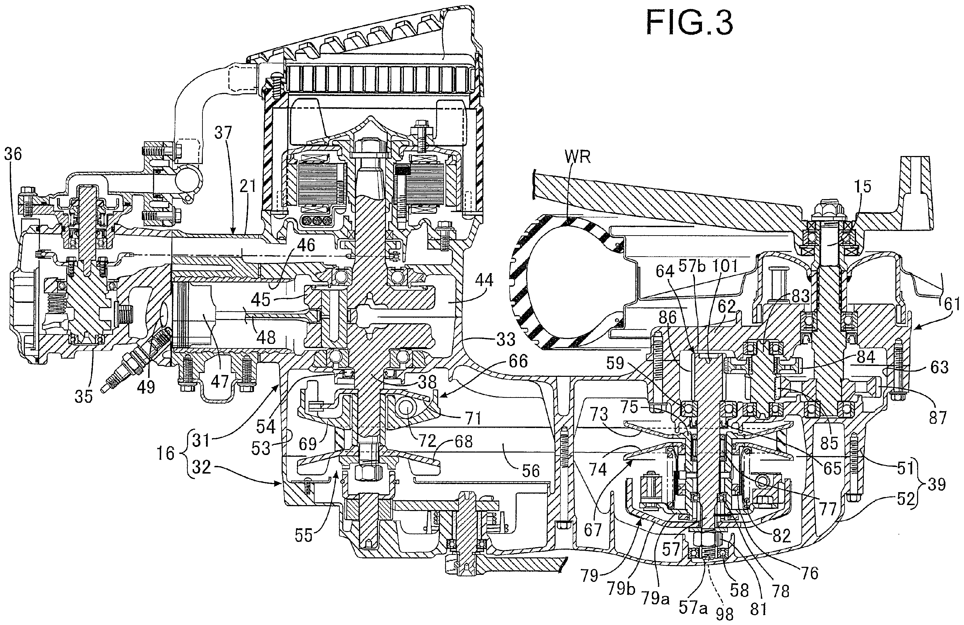

As shown in FIG. 3, a crank chamber 44 is defined in the crankcase 33. A crank 45 of the crankshaft 38 is housed within the crank chamber 44. A cylinder bore 46 is defined in the cylinder block 34. A piston 47 is fitted into the cylinder bore 46. A piston rod 48 is linked to the crank 45. The crankshaft 38 rotates in response to movement of the piston 47. A combustion chamber 49 is formed between the piston 47 and the cylinder head 35. Movement of the piston 47 is caused in response to combustion within the combustion chamber 49.

The casing 39 includes a case main body 51 that is continuous from the crankcase 33 and extends to the rear of the axle 15 of the rear wheel WR, and a first cover 52 that covers the case main body 51 from the outside. A transmission chamber 53 is formed between the case main body 51 and the first cover 52. The crankshaft 38 protrudes out of the crank chamber 44 into the transmission chamber 53. The transmission chamber 53 is isolated from the crank chamber 44 by the function of a seal 54 fitted around the crankshaft 38. A belt-type continuously variable transmission 55 is housed in the transmission chamber 53.

The belt-type continuously variable transmission 55 includes a drive shaft 57 linked to the crankshaft 38 via a V belt 56. The drive shaft 57 is rotatably supported on the first cover 52 via a first bearing 58 fixed to a first end face 57a side of the drive shaft 57. A second end face 57b of the drive shaft 57 protrudes through the case main body 51 on the side opposite to the first end face 57a. The drive shaft 57 is rotatably supported on the case main body 51 via a second bearing 59. The drive shaft 57 has an axis parallel to the rotational axis of the crankshaft 38. The axis corresponds to the rotational axis of the drive shaft 57.

A gear case 61 includes a rear part of the case main body 51 and a second cover 62 that covers the rear part of the case main body 51 from the inside. A gear chamber 63 is formed between the case main body 51 and the second cover 62. A gear mechanism 64 is housed in the gear chamber 63. The gear mechanism 64 links the axle 15 of the rear wheel WR to the drive shaft 57. The axle 15 has an axis parallel to the axis of the drive shaft 57. The axis of the axle 15 corresponds to the rotational axis of the axle 15. The second end face 57b of the drive shaft 57 enters the gear chamber 63. The gear chamber 63 is isolated from the transmission chamber 53 by the function of a seal 65 fitted around the drive shaft 57.

The continuously variable transmission 55 includes a drive pulley 66 and a driven pulley 67. The drive pulley 66 is mounted on the crankshaft 38. The driven pulley 67 is mounted on the drive shaft 57. The V belt 56 is wound around the drive pulley 66 and the driven pulley 67.

The drive pulley 66 includes a fixed half body 68 and a movable half body 69. The fixed half body 68 is fixed to the crankshaft 38. The movable half body 69 is linked to the crankshaft 38 so that it can be freely displaced in parallel with the rotational axis on the crankshaft 38. A weight roller 72 is disposed between the movable half body 69 and a ramp plate 71 fixed to the crankshaft 38. When the weight roller 72 is moved away from the rotational axis of the crankshaft 38 by the action of centrifugal force, the movable half body 69 moves toward the fixed half body 68. In this process, the trajectory of the V belt 56 goes away from the rotational axis of the crankshaft 38. When the rotational speed drops and the centrifugal force weakens, the movable half body 69 moves away from the fixed half body 68. In this process, the trajectory of the V belt 56 moves toward the rotational axis of the crankshaft 38.

The driven pulley 67 includes a fixed half body 73 and a movable half body 74. The fixed half body 73 and the movable half body 74 are supported on the drive shaft 57 so that they can rotate relative to the drive shaft 57. Upon supporting the fixed half body 73 and the movable half body 74, an inner tube 75 and an outer tube 76 are fitted onto the drive shaft 57 so as to be coaxial with the drive shaft 57. The outer tube 76 is supported on the inner tube 75 so that it can be freely displaced relative to the inner tube 75 in the axial direction. The inner tube 75 is supported on the drive shaft 57 via a third bearing 77 and a fourth bearing 78. The displacement of the inner tube 75 relative to the drive shaft 57 in the axial direction is restrained. The fixed half body 73 is fixed to the inner tube 75, and the movable half body 74 is fixed to the outer tube 76.

A centrifugal clutch 79 is disposed between the inner tube 75 and the drive shaft 57. The centrifugal clutch 79 includes an inner member 79a fixed to the inner tube 75 and an outer member 79b extending to the outside of the inner member 79a and joined to the drive shaft 57. The outer member 79b is fixed to the drive shaft 57 by tightening a nut 81. When the engine rotational speed exceeds a set rotational speed, the inner member 79a is joined to the outer member 79b, and relative rotation between the driven pulley 67 and the drive shaft 57 is prevented. The drive shaft 57 rotates following the driven pulley 67. When the joining is released, the driven pulley 67 undergoes relative rotation on the drive shaft 57.

A coil spring 82 is sandwiched between the inner member 79a of the centrifugal clutch 79 and the movable half body 74 of the driven pulley 67. The coil spring 82 exerts a resilient force that pushes the movable half body 74 toward the fixed half body 73 of the driven pulley 67. When the trajectory of the V belt 56 goes away from the rotational axis of the crankshaft 38 around the drive pulley 66, the trajectory of the V belt 56 goes toward the axis of the drive shaft 57 around the driven pulley 67, and the movable half body 74 moves away from the fixed half body 73. When the trajectory of the V belt 56 goes toward the rotational axis of the crankshaft 38 around the drive pulley 66, the trajectory of the V belt 56 goes away from the axis of the drive shaft 57 around the driven pulley 67, and the movable half body 74 is moved toward the fixed half body 73 in accordance with the pushing force of the coil spring 82.

The gear mechanism 64 includes a counter shaft 83 rotatably supported on the case main body 51 and the second cover 62 within the gear chamber 63. A first counter gear 84 and a second counter gear 85 are fixed to the counter shaft 83. The first counter gear 84 meshes with a drive gear 86 that is cut in an outer peripheral face of the drive shaft 57. The second counter gear 85 meshes with a final gear 87 relatively non-rotatably fixed to the axle 15. Here, the second counter gear 85 is cut in an outer peripheral face of the counter shaft 83. The driving force of the drive shaft 57 is transmitted to the axle 15 by the action of the gear mechanism 64.

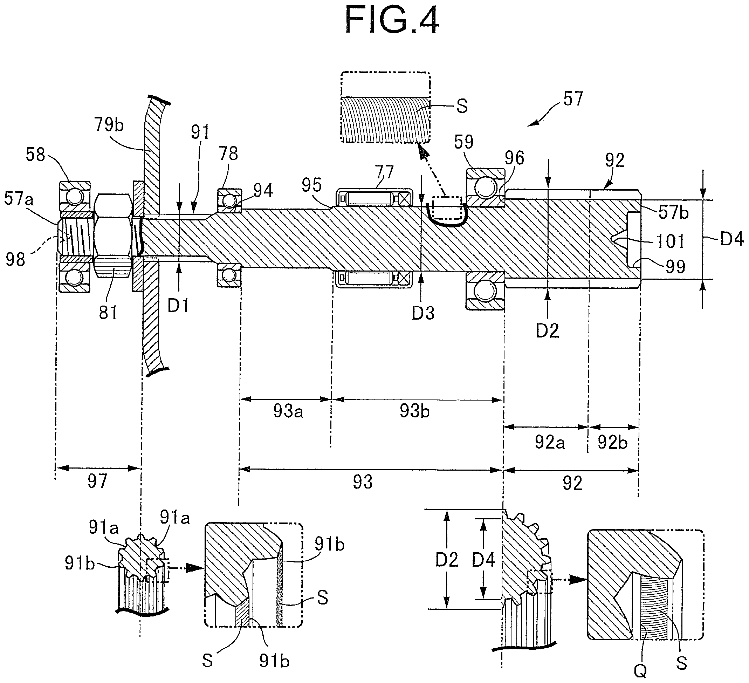

As shown in FIG. 4, the drive shaft 57 includes a spline shaft 91 having a first diameter D1 in part of the axial direction and a gear shaft 92 having a second diameter D2 that is larger than the first diameter D1. An intermediate shaft part 93 is formed between the spline shaft 91 and the gear shaft 92, the intermediate shaft part 93 connecting the spline shaft 91 and the gear shaft 92 to each other. The intermediate shaft part 93 increases in diameter stepwise in going toward the gear shaft 92 between the spline shaft 91 and the gear shaft 92.

A tooth groove 91a of the spline shaft 91 is a forged black surface, and a tooth tip large diameter portion 91b is a machined face (may be a polished face). A plurality of machining marks S are present on the machined face in the peripheral direction around the axis as a result of shaving. The outer member 79b of the centrifugal clutch 79 is fitted around the spline shaft 91. A machined face 94 is provided so as to be adjacent to the spline shaft 91 in the axial direction, and the fourth bearing 78 is fitted onto the machined face 94 by press fitting. The machined face has a high dimensional precision compared with a forged black surface. A plurality of machining marks are present on the machined face in the peripheral direction around the axis as a result of shaving. With regard to the spline shaft 91, since the tooth groove 91a is a forged black surface and the tooth tip large diameter portion 91b is a machined face, the portion to be machined can be reduced, and it can have a structure that contributes to a shortening of the processing time and an improvement in the productivity when forging a spline shape.

The gear shaft 92 has a forged black surface 92a on at least part of the region in the axial direction, and has a machined face 92b on another region in the axial direction (may have a polished face 92b). The gear shaft 92 has a helical gear in this embodiment. The machined face 92b of the gear shaft 92 forms a drive gear that meshes with the first counter gear 84. The range of the machined face 92b is determined by the positional relationship of meshing with the first counter gear 84. The machined face 92b is formed by for example machining. A plurality of machining marks S are present on the machined face 92b from the tooth tip toward the tooth base. In addition, one line of a stepped portion Q extending in the axial direction is present on the machined face 92b on the interface with the forged black surface of the tooth base. On the other hand, since the forged black surface 92a has neither such a machining mark in a fixed direction nor a stepped portion due to machining, the tooth thickness of the forged black surface 92a is larger than that of the machined face 92b.

The intermediate shaft part 93 has a first intermediate shaft portion 93a with a forged black surface and a second intermediate shaft portion 93b with a machined face having an external diameter that is larger than the external diameter of the first intermediate shaft portion 93a. The first intermediate shaft portion 93a and the second intermediate shaft portion 93b each have a uniform external diameter over the entire region in the axial direction. The machined face has a higher dimensional precision than the forged black surface. The second bearing 59 and the third bearing 77 are fitted around the second intermediate shaft portion 93b of the machined face. When carrying out the fitting, press fitting is for example employed. The first intermediate shaft portion 93a and the second intermediate shaft portion 93b are connected via a taper-shaped forged black surface 95. A plurality of machining marks S are present on the machined face in the peripheral direction around the axis as a result of shaving.

Here, a positioning step 96 is defined between the gear shaft 92 and the second intermediate shaft portion 93b of the intermediate shaft part 93. The second bearing 59 can be positioned by being abutted against the step 96 in the axial direction. Moreover, an external diameter D3 of the intermediate shaft part 93 is smaller than a tooth base diameter D4, which is the minimum diameter of the gear shaft 92.

The drive shaft 57 has a threaded shaft part 97 between the spline shaft 91 and the first end face 57a. The threaded shaft part 97 has a smaller diameter than that of the spline shaft 91. A screw groove is cut in an outer peripheral face of the threaded shaft part 97. The nut 81 is screwed onto the threaded shaft part 97. The nut 81 retains the outer member 79b of the centrifugal clutch 79 on the spline shaft 91.

The first end face 57a of the drive shaft 57 has a center hole 98 in the center. The center hole 98 is formed into a cone shape whose diameter decreases with depth. The central axis of the center hole 98 is superimposed on the axis of the drive shaft 57. The first bearing 58 is fitted around an end part of the threaded shaft part 97 on the nut 81 side. In this way, the spline shaft 91 and the intermediate shaft part 93 of the drive shaft 57 are supported via two points by means of the pair of bearings 58 and 59. Here, since the conical center hole 98 has a forged black surface, the drive shaft 57 can be positioned reliably by means of the conical center hole 98 without displacement in the axial direction.

The second end face 57b of the drive shaft 57 has an indentation 99 of the forged black surface in the center. The indentation 99 defines a columnar space that is coaxial with the axis of the drive shaft 57. A center hole 101 is formed in the bottom of the indentation 99. The center hole 101 is formed into a cone shape that reduces in diameter with depth. The central axis of the center hole 101 is superimposed on the axis of the drive shaft 57. In this way, since the second end face 57b in the axial direction of the gear shaft 92 has the cylindrical indentation 99 of the forged black surface, the portion to be machined can be reduced, thus contributing to a shortening of the processing time. Furthermore, when the indentation 99 is forged, the shaft material flows plastically on the outer periphery, thus enabling the gear shaft 92 to be formed without underfill. Since the conical center hole 101 has a forged black surface, the drive shaft 57 can be positioned reliably by means of the conical center hole 101 without displacement in the axial direction.

When the engine 31 is operated, the crankshaft 38 rotates. Rotation of the drive pulley 66 is transmitted to the driven pulley 67 by the action of the V belt 56. When the rotational speed of the crankshaft 38 increases, the winding radius of the V belt 56 around the drive pulley 66 is increased by the action of the weight roller 72, and the winding radius of the V belt 56 around the driven pulley 67 decreases accordingly. Subsequently, the rotational speed of the driven pulley 67 changes in accordance with the rotational speed of the crankshaft 38.

The inner member 79a of the centrifugal clutch 79 undergoes relative rotation on the drive shaft 57 in response to rotation of the driven pulley 67. When the rotational speed of the crankshaft 38 exceeds a set rotational speed, the inner member 79a is joined to the outer member 79b, and the drive shaft 57 rotates following the driven pulley 67. The rotation of the drive shaft 57 is transmitted to the axle 15 through the gear mechanism 64. In this way the rear wheel WR rotates. The two-wheeled motor vehicle 11 travels forward in accordance with rotation of the rear wheel WR.

With regard to the drive shaft 57, the diameter increases in sequence from the spline shaft 91 toward the gear shaft 92, and since as described later a section from the spline shaft 91 to the intermediate shaft part 93 has a smaller diameter than the internal diameter of a mold for gear formation, the gear shaft 92 can be forged individually within a die when forging the gear. During the forging process, teeth can be formed over the entire periphery around the shaft all at once regardless of the number of teeth. In this way, the processing time can be reduced when forming the drive shaft 57. The drive shaft 57 has a structure that can contribute as much as possible to a shortening of the processing time.

As described later, the forging process employs a second die 131 for gear formation when forming the gear shaft. A through hole as a profile space that is made in the shape of the helical gear of the gear shaft 92 is defined in the second die 131. In this arrangement, since the maximum external diameter D3 of the intermediate shaft part 93 is smaller than the minimum diameter D4, which corresponds to the tooth base part of the gear groove of the gear shaft 92, the spline shaft 91 and the intermediate shaft part 93 pass through the through hole. In this way the helical gear can be cut only in the gear shaft 92 while rotating it.

As described above, the gear shaft 92 has a forged black surface 92a in part and a machined face 92b in part. On the machined face 92b, the first counter gear 84 meshes with the gear shaft 92. Since the dimensional precision of the gear is enhanced in accordance with the machining, meshing with the first counter gear 84 can be reliably and appropriately maintained. The forged face is maintained on the forged black surface 92a.

For the drive shaft 57 the gear shaft 92 has a helical gear. Similarly, the first counter gear 84 is formed as a helical gear. In accordance with such a helical gear and the first counter gear 84, noise due to meshing of the two is suppressed.

With regard to the drive shaft 57, the spline shaft 91 has a machined face on the tooth tip large diameter portion 91b in the outermost peripheral region, which is the furthest from the axis. The dimensional precision of the external diameter can be enhanced for the spline shaft 91. It is therefore possible to ensure that it can be fitted reliably into the outer member 79b of the centrifugal clutch 79, which is a separate member.

The spline shaft 91 has the machined face 94 between the spline shaft 91 and the intermediate shaft part 93. For the machined face 94, the dimensional precision of the external diameter of the spline shaft 91 can be enhanced. It is therefore possible to ensure that it can be press fitted, insertion fitted, etc. reliably into the fourth bearing 78, which is a separate member.

The intermediate shaft part 93 has the first intermediate shaft portion 93a with a forged black surface and the second intermediate shaft portion 93b with a machined face, which is connected to the first intermediate shaft portion 93a via the tapered part 95 with a forged black surface and has the external diameter D3, which is larger than the external diameter of the first intermediate shaft portion 93a. The dimensional precision of the external diameter D3 of the intermediate shaft part 93 can be enhanced by the machined face. It is therefore possible to ensure that the second intermediate shaft portion 93b can be reliably fitted into the second bearing 59 and the third bearing 77, which are separate members. When fitting, the first intermediate shaft portion 93a, which has a smaller diameter than the external diameter D3, can pass through the second bearing 59 and the third bearing 77.

For the drive shaft 57 the second bearing 59 is disposed on the second intermediate shaft portion 93b, which is the machined face of the intermediate shaft part 93, in accordance with the positioning of the step 96. In this arrangement, for example, the gear shaft 92 is supported on the second bearing 59 via a single point. Since the gear shaft 92 has a larger diameter than that of the spline shaft 91 or the intermediate shaft part 93, even when it is supported via a single point, runout of the gear shaft 92 can reliably be suppressed. Moreover, for the gear shaft 92, fitting of a bearing can be omitted compared with a two-point support, and as a result the workload when assembling the gear case 61 can be alleviated.

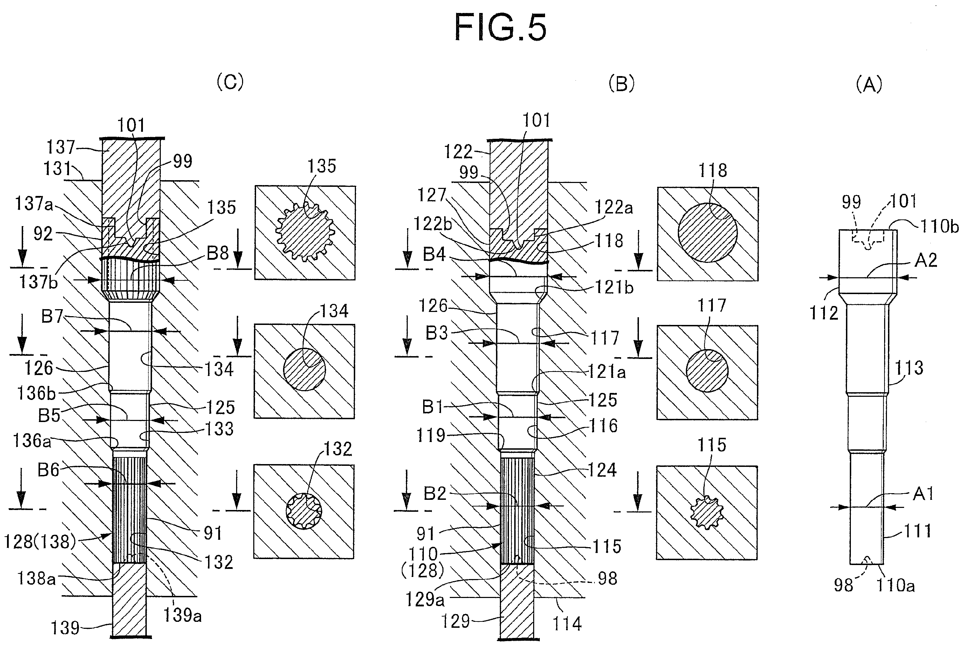

A method for manufacturing the drive shaft 57 is now explained. When producing the drive shaft 57, as shown in FIG. 5 (A) a shaft material 110 is prepared. The shaft material 110 has a first preliminary cylindrical part 111 that extends in the axial direction and has a first diameter A1, a second preliminary cylindrical part 112 that has a second diameter A2 larger than the first diameter A1, and a preliminary intermediate shaft part 113 that connects to each other the first preliminary cylindrical part 111 and the second preliminary cylindrical part 112 and has a larger diameter than the first diameter A1 but a smaller diameter than the second diameter A2. A first end face 110a of the shaft material 110 has a center hole 98 in the center. A second end face 110b of the shaft material 110 has an indentation 99 and a center hole 101 in the center. The shaft material 110 is forged using forging equipment.

As shown in FIG. 5 (B), the forging equipment includes a first die 114 formed from a plurality of dies. The plurality of dies are linked by means of a bolt, etc., which is not illustrated. The first die 114 has a first molding part 115 with a profile space that is made in the shape of the spline shaft 91, a second molding part 116 connected to the first molding part 115, a third molding part 117 connected to the second molding part 116, and a fourth molding part 118 connected to the third molding part 117. The second molding part 116, the third molding part 117 and the fourth molding part 118 have a profile space that is made in the shape of the preliminary intermediate shaft part 113 and the second preliminary cylindrical part 112.

An internal diameter B1 of the second molding part 116 is larger than a maximum internal diameter B2 of the first molding part 115, which is made in the shape of the spline shaft 91. Therefore, a tapered face 119 is formed between the first molding part 115 and the second molding part 116. The tapered face 119 defines a space having a truncated cone shape that narrows toward the first molding part 115. An internal diameter B3 of the third molding part 117 is larger than the internal diameter B1 of the second molding part 116, and an internal diameter B4 of the fourth molding part 118 is larger than the internal diameter B3 of the third molding part 117. In this way tapered faces 121a and 121b respectively are formed between the third molding part 117 and the second molding part 116 and between the third molding part 117 and the fourth molding part 118. The tapered faces 121a and 121b define a space having a truncated cone shape that narrows in going closer to the first molding part 115.

The shaft material 110 is inserted into the profile space of the fourth molding part 118 of the first die 114 with the first preliminary cylindrical part 111 first, and pressure is applied by means of a punch 122. The extremity of the punch 122 is provided with a cylindrical pedestal 122a that is coaxial with the axis of the profile space, and a cone-shaped projection 122b is provided on the center of the pedestal 122a. The pedestal 122a is fitted into the indentation 99 of the shaft material 110. The projection 122b is fitted into the center hole 101 of the shaft material 110. Centering of the shaft material 110 is carried out by means of the projection 122b.

A spline is formed on a first diameter part 124 by the action of pressure from the punch 122 in response to entrance into the first molding part 115. A second diameter part 125 of the preliminary intermediate shaft part 113 enters the second molding part 116, a third diameter part 126 enters the third molding part 117, and a fourth diameter part 127 enters the fourth molding part 118. In this way the shaft material 110 having a predetermined shape is forged within the first die 114, and the spline shaft 91 is formed on the first end 110a side. When formation of the spline shaft 91 is complete, the pressure of the punch 122 is released, and a knockout pin 129 is abutted against a first end 128a of a spline molded product 128. The extremity of the knockout pin 129 is provided with a cone-shaped projection 129a. The projection 129a is formed so as to be coaxial with the axis of the profile space. Centering of the spline molded product 128 is carried out by means of the projection 129a. The spline molded product 128 is pushed out of the first die 114 by means of the pressure of the knockout pin 129.

Subsequently, as shown in FIG. 5 (C), in the forging equipment the second die 131 formed from a plurality of dies is prepared. The plurality of dies are linked by means of a bolt, etc., which is not illustrated. The second die 131 has a first through hole 132 with a larger diameter than that of the spline shaft 91, a fifth molding part 133 connected to the first through hole 132, a sixth molding part 134 connected to the fifth molding part 133, and a seventh molding part 135 connected to the sixth molding part 134 and having a gear molding part.

An internal diameter B5 of the fifth molding part 133 is larger than an internal diameter B6 of the first through hole 132. In this way a tapered face 136a is formed between the first through hole 132 and the fifth molding part 133. The tapered face 136a defines a space having a truncated cone shape that narrows in going toward the first through hole 132. An internal diameter B7 of the sixth molding part 134 is larger than the internal diameter B5 of the fifth molding part 133. In this way a tapered face 136b is formed between the fifth molding part 133 and the sixth molding part 134. The tapered face 136b defines a space having a truncated cone shape that narrows in going toward the fifth molding part 133.

The spline molded product 128 is inserted into the seventh molding part 135 with the spline shaft 91 first. Pressure is applied to the spline molded product 128 by mans of a punch 137. The extremity of the punch 137 is provided with a cylindrical pedestal 137a that is coaxial with the axis of the profile space, and a cone-shaped projection 137b is provided on the center of the pedestal 137a. The pedestal 137a is fitted into the indentation 99 of the spline molded product 128. The projection 137b is fitted into the center hole 101 of the spline molded product 128. In this way centering of the spline molded product 128 is carried out.

A helical gear is formed on the cylindrical fourth diameter part 127 by the action of pressure from the punch 137 while rotating in response to entrance into the seventh molding part 135. That is, the gear shaft 92 is forged on the fourth diameter part 127. In this process, the spline shaft 91 is received by the first through hole 132, which has a cylindrical space. Since the internal diameter B6 of the first through hole 132 is larger than the external diameter B2 of the spline shaft 91, there is no problem in terms of rotation. The second diameter part 125 of the spline molded product 128 enters the fifth molding part 133, and the first intermediate shaft portion 93a of the intermediate shaft part 93 is forged from the second diameter part 125. The third diameter part 126 of the spline molded product 128 enters the sixth molding part 134, and a forged black surface for the second intermediate shaft portion 93b is formed on the third diameter part 126 of the spline molded product 128 by the action of the sixth molding part 134. When forging of the gear shaft 92 and the intermediate shaft part 93 is completed in this way, the pressure of the punch 137 is released, and a knockout pin 139 is abutted against a first end 138a of a gear molded product 138. The extremity of the knockout pin 139 is provided with a cone-shaped projection 139a. The projection 139a is formed coaxially with the axis of the profile space. Centering of the spline molded product 128 is carried out by means of the projection 139a. The gear molded product 138 is pushed out of the second die 131 by means of the pressure of the knockout pin 139 while rotating in reverse.

Following this, as shown in FIG. 4, the gear molded product 138 is subjected to predetermined machining, thus completing the drive shaft 57. That is, the third diameter part 126 of the gear molded product 138 is subjected to machining of the forged black surface, the forged black surface on the surface is turned, and a machined face of the second intermediate shaft portion 93b is formed. Compared with a black surface cylindrical face, the machined face has enhanced dimensional precision for the external diameter. The second bearing 59 and the third bearing 77 are fitted onto the machined face. Since the external diameter of the first intermediate shaft portion 93a is smaller than the external diameter of the second intermediate shaft portion 93b, the second bearing 59 and the third bearing 77 can have the first intermediate shaft portion 93a passed through when fitting them. Furthermore, the step 95 between the first intermediate shaft portion 93a and the second intermediate shaft portion 93b has a taper shape. Therefore, the second bearing 59 and the third bearing 77 can easily be moved from the first intermediate shaft portion 93a to the second intermediate shaft portion 93b. Moreover, since the third bearing 77 does not abut against the step 95, the taper-shaped step 95 remains as a forged black surface, thus contributing to a reduction in the number of processing steps.

A cylindrical face of the forged black surface between the spline shaft 91 and the intermediate shaft part 93 is subjected to machining. The forged face on the surface is turned, thus forming the machined face 94. The machined face 94 has enhanced dimensional precision for the external diameter compared with the cylindrical face of the forged black surface. The fourth bearing 78 is fitted onto the machined face 94.

The spline shaft 91 is also subjected to machining. With regard to the spline shaft 91, the tooth tip large diameter portion 91b, which is the outermost peripheral region that is furthest from the axis, is machined. In this way the spline shaft 91 has enhanced dimensional precision for the external diameter. Here, in accordance with this machining, the maximum diameter of the spline shaft 91 is smaller than the external diameter of the machined face 94. Because of this, when fitting the fourth bearing 78 around the machined face 94, the spline shaft 91 can easily pass through the fourth bearing 78.

Part in the axial direction, meshing with the counter gear 84, of the helical gear of the gear shaft 92 is subjected to machining, thus forming the machined face 92b. Due to this machining the dimensional precision of the helical gear is enhanced. In this embodiment, the gear shaft 92 meshes with the counter gear 84 via an end part side, but the gear shaft 92 may mesh with the counter gear 84 via a part where it is close to the second bearing 59. In either case, only that portion of the forged black surface in the axial direction of the gear shaft 92 that meshes with the counter gear 84 may be subjected to machining.

### SECOND EMBODIMENT

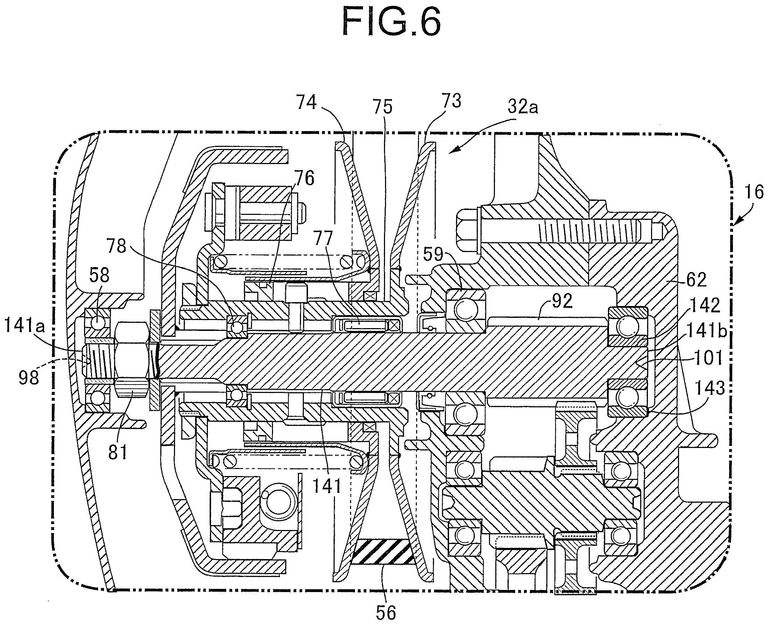

FIG. 6 schematically shows a power unit 16 that includes a transmission device 32a related to a second embodiment. In the transmission device 32a related to the second embodiment a drive shaft 141 is used instead of the drive shaft 57 described above. The drive shaft 141 has a small diameter part 142 defined in the gear shaft 92 between a second end 141b and the gear shaft 92, which is a helical gear. The drive shaft 141 is rotatably supported on the second cover 62 of the gear case 61 via a small diameter part 142. A fifth bearing 143 fixed to the second cover 62 is fitted around the small diameter part 142. When forming the small diameter part 142, the shaft material 110 subsequent to forging may be subjected to machining for a section between the helical gear of the gear shaft 92 and the second end 141b. The arrangement is otherwise the same as that of the transmission device 32 described above.

## Claims

1. A method for manufacturing a forged drive shaft comprising
a step (A) of preparing a shaft material (110) having a first preliminary cylindrical part (111) that has a first diameter (A1) and extends in an axial direction thereof, a second preliminary cylindrical part (112) that has a second diameter (A2) that is larger than the first diameter (A1), and a preliminary intermediate shaft part (113) that connects to each other the first preliminary cylindrical part (111) and the second preliminary cylindrical part (112) and that has a diameter larger than the first diameter (A1) but smaller than the second diameter (A2),
a step (B) of forging a spline molded product (128) by inserting the shaft material (110) into a profile space of a first die (114) having a spline molding part (115) and applying pressure to the shaft material (110) by means of a punch (122) to thus mold the spline molded product (128) having a spline shaft (91) having a first diameter (B2) on a first end side of the shaft material (110) within the first die (114), and
a step (C) of forging a gear molded product (138) by inserting the spline molded product (128) via the spline shaft part side into a second die (131) having a gear molding part (135) and applying pressure to the spline molded product (128) by means of a punch (137) to thus mold the gear molded product (138) having a gear shaft (92) on an outer periphery on a side opposite to the spline shaft (91) within the second die (131),
**characterized in that** said method comprises a step of leaving a forged black surface (92a) on a tooth face in at least part of a region in an axial direction of the gear shaft (92) of the gear molded product (138) and machining the tooth face in another region in the axial direction.

2. The method for manufacturing a forged drive shaft according to Claim 1, wherein the step (C) of producing the forged drive shaft comprises a step of forging a cylindrical recess (99) in a center of an end face of the gear shaft (92).

3. The method for manufacturing a forged drive shaft according to Claim 2, comprising a step of leaving a deepest part of the cylindrical recess (99) as a forged black surface when machining the end part of the gear shaft (92).

4. The method for manufacturing a forged drive shaft according to any one of Claims 1 to 3, wherein the spline shaft (91) of the gear molded product (138) is formed with a spline having a tooth groove (91a) and a tooth tip large diameter portion (91b), the method further comprising a step of machining the tooth tip large diameter portion (91b) while leaving the tooth groove (91a) as a forged black surface.

5. A forged drive shaft comprising
a spline shaft (91) having a first diameter (D1),
a gear shaft (92) having a second diameter (D2) that is larger than the first diameter (D1), and
an intermediate shaft part (93) that connects to each other the spline shaft (91) and the gear shaft (92) and has a diameter larger than the first diameter (D1) but smaller than the second diameter (D2),
**characterized in that**
the gear shaft (92) includes a tooth face, the tooth face having a forged black surface (92a) on at least part of a region in an axial direction and having a machined face on another range (92b) in the axial direction.

## Patentansprüche

1. Verfahren zur Herstellung einer geschmiedeten Antriebswelle, umfassend
einen Schritt (A) zum Vorbereiten eines Wellenmaterials (110) mit einem ersten vorläufigen zylindrischen Teil (111), der einen ersten Durchmesser (A1) aufweist, und sich in einer axialen Richtung davon erstreckt, einem zweiten vorläufigen zylindrischen Teil (112), der einen zweiten Durchmesser (A2) aufweist, der größer als der erste Durchmesser (A1) ist, und einem vorläufigen Zwischenwellenteil (113), der den ersten vorläufigen zylindrischen Teil (111) und den zweiten vorläufigen zylindrischen Teil (112) miteinander verbindet und der einen Durchmesser größer als der erste Durchmesser (A1), aber kleiner als der zweite Durchmesser (A2) aufweist,
einen Schritt (B) des Schmiedens eines Rillenformprodukts (128) durch Einführen des Wellenmaterials (110) in einen Profilraum einer ersten Matrize (114) mit einem Rillenformteil (115) und Ausüben von Druck auf das Wellenmaterial (110) mittels eines Stempels (122), um so das Rillenformprodukt (128) mit einer Rillenwelle (91) mit einem ersten Durchmesser (B2) an einer ersten Endseite des Wellenmaterials (110) innerhalb der ersten Matrize (114) zu formen, und
einen Schritt (C) des Schmiedens eines Zahnradformprodukts (138) durch Einführen des Rillenformprodukts (128) über die Rillenwellen-Eimerseite in eine zweite Matrize (131) mit einem Zahnradformteil (135) und Ausüben von Druck auf dem Rillenformprodukt (128) mittels eines Stempels (137), um so das Zahnradformprodukt (138) mit einer Zahnradwelle (92) an einem Außenumfang auf einer der Rillenwelle (91) gegenüberliegenden Seite innerhalb der zweiten Matrize (131) zu formen,
**dadurch gekennzeichnet, dass** das Verfahren einen Schritt umfasst von Verlassen einer geschmiedeten schwarzen Oberfläche (92a) auf einer Zahnfläche in mindestens einem Teil eines Bereichs in axialer Richtung der Zahnradwelle (92) des Zahnradformprodukts (138) und Bearbeiten der Zahnfläche in einem anderen Bereich in axialer Richtung.

2. Verfahren zur Herstellung einer geschmiedeten Antriebswelle nach Anspruch 1, wobei der Schritt (C) zum Herstellen der geschmiedeten Antriebswelle einen Schritt zum Schmieden einer zylindrischen Aussparung (99) in einer Mitte einer Endfläche der Zahnradwelle (92) umfasst.

3. Verfahren zur Herstellung einer geschmiedeten Antriebswelle nach Anspruch 2, umfassend einen Schritt des Verlassens eines tiefsten Teils der zylindrischen Aussparung (99) als geschmiedete schwarze Oberfläche bei der Bearbeitung des Endteils der Zahnradwelle (92).

4. Verfahren zur Herstellung einer geschmiedeten Antriebswelle nach einem der Ansprüche 1 bis 3, wobei die Rillenwelle (91) des Zahnradformprodukts (138) mit einer Rille mit einer Zahnnut (91a) und einem Zahnspitzenabschnitt mit großem Durchmesser (91b) ausgebildet ist, wobei das Verfahren ferner einen Schritt des Bearbeitens des Zahnspitzenabschnitts mit großem Durchmesser (91b) umfasst, beim Verlassen der Zahnnut (91a) als geschmiedete schwarze Oberfläche.

5. Geschmiedete Antriebswelle, umfassend
eine Rillenwelle (91) mit einem ersten Durchmesser (D1),
eine Zahnradwelle (92) mit einem zweiten Durchmesser (D2), der größer als der erste Durchmesser (D1) ist, und
einen Zwischenwellenteil (93), der die Rillenwelle (91) und die Zahnradwelle (92) miteinander verbindet und einen Durchmesser hat, der größer als der erste Durchmesser (D1), aber kleiner als der zweite Durchmesser (D2) ist,
**dadurch gekennzeichnet**
**dass** die Zahnradwelle (92) eine Zahnfläche aufweist, wobei die Zahnfläche eine geschmiedete schwarze Oberfläche (92a) an mindestens einem Teil eines Bereichs in axialer Richtung und eine bearbeitete Fläche an einem anderen Bereich (92b) in axialer Richtung aufweist.

## Revendications

1. Procédé de fabrication d'un arbre d'entraînement forgé comprenant
une étape (A) de préparation d'un matériau d'arbre (110) ayant une première partie cylindrique préliminaire (111) qui a un premier diamètre (A1) et qui s'étend dans sa direction axiale, une deuxième partie cylindrique préliminaire (112) qui a un deuxième diamètre (A2) qui est plus grand que le premier diamètre (A1), et une partie d'arbre intermédiaire préliminaire (113) qui relie l'une à l'autre la première partie cylindrique préliminaire (111) et la deuxième partie cylindrique préliminaire (112) et qui a un diamètre plus grand que le premier diamètre (A1) mais plus petit que le deuxième diamètre (A2),
une étape (B) de forgeage d'un produit moulé à cannelures (128) en insérant le matériau de l'arbre (110) dans un espace profilé d'un premier moule (114) ayant une partie de moulage à cannelures (115) et en appliquant une pression sur le matériau d'arbre (110) au moyen d'un poinçon (122) pour mouler ainsi le produit moulé à cannelures (128) ayant un arbre à cannelures (91) ayant un premier diamètre (B2) sur un premier côté d'extrémité du matériau d'arbre (110) à l'intérieur du premier moule (114), et
une étape (C) de forgeage d'un produit moulé d'engrenage (138) en insérant le produit moulé à cannelures (128) via le côté de la partie d'arbre à cannelures dans un deuxième moule (131) ayant une partie de moulage d'engrenage (135) et en appliquant une pression sur le produit moulé à cannelures (128) au moyen d'un poinçon (137) pour mouler ainsi le produit moulé d'engrenage (138) ayant un arbre d'engrenage (92) sur une périphérie externe sur un côté opposé à l'arbre à cannelures (91) à l'intérieur du deuxième moule (131),
**caractérisé en ce que** ledit procédé comprend une étape consistant à laisser une surface noire forgée (92a) sur une face de dent dans au moins une partie d'une région dans une direction axiale de l'arbre d'engrenage (92) du produit moulé d'engrenage (138) et usiner la face de dent dans une autre région dans la direction axiale.

2. Procédé de fabrication d'un arbre d'entraînement forgé selon la revendication 1, dans lequel l'étape (C) de production de l'arbre d'entraînement forgé comprend une étape de forgeage d'un évidement cylindrique (99) au centre d'une face d'extrémité de l'arbre d'engrenage (92).

3. Procédé de fabrication d'un arbre d'entraînement forgé selon la revendication 2, comprenant une étape consistant à laisser une partie la plus profonde de l'évidement cylindrique (99) comme une surface noire forgée lors de l'usinage de la partie d'extrémité de l'arbre d'engrenage (92).

4. Procédé de fabrication d'un arbre d'entraînement forgé selon l'une quelconque des revendications 1 à 3, dans lequel l'arbre à cannelures (91) du produit moulé d'engrenage (138) est formé avec une cannelure ayant une rainure de dent (91a) et une partie de grand diamètre de pointe de dent (91b), le procédé comprenant en outre une étape d'usinage de la partie de grand diamètre de pointe de dent (91b) tout en laissant la rainure de dent (91a) comme une surface noire forgée.

5. Arbre d'entraînement forgé comprenant
un arbre à cannelures (91) ayant un premier diamètre (D1),
un arbre d'engrenage (92) ayant un deuxième diamètre (D2) qui est plus grand que le premier diamètre (D1), et
une partie d'arbre intermédiaire (93) qui relie l'un à l'autre l'arbre à cannelures (91) et l'arbre d'engrenage (92) et qui a un diamètre plus grand que le premier diamètre (D1) mais plus petit que le deuxième diamètre (D2),
**caractérisé en ce que**
l'arbre d'engrenage (92) comprend une face de dent, la face de dent ayant une surface noire forgée (92a) sur au moins une partie d'une région dans une direction axiale et ayant une face usinée sur une autre plage (92b) dans la direction axiale.
